Europäisches Patentamt

European Patent Office

Office européen des brevets

(11) Veröffentlichungsnummer: **0 274 018 B1**

# EUROPÄISCHE PATENTSCHRIFT

(45) Veröffentlichungstag der Patentschrift: **23.10.91**

(21) Anmeldenummer: **87116088.3**

(22) Anmeldetag: **19.03.85**

(51) Int. Cl.⁵: **B29C 47/02**, //B29L23:22

(60) Veröffentlichungsnummer der früheren
Anmeldung nach Art. 76 EPÜ: **0 160 632**

(54) Verfahren und Vorrichtung zur Herstellung flexibler Kabelschutzrohre mit Kabeleinziehdraht.

(30) Priorität: **20.03.84 BE 212598**

(43) Veröffentlichungstag der Anmeldung:
**13.07.88 Patentblatt 88/28**

(45) Bekanntmachung des Hinweises auf die
Patenterteilung:
**23.10.91 Patentblatt 91/43**

(84) Benannte Vertragsstaaten:
**AT CH DE FR GB IT LI LU NL SE**

(56) Entgegenhaltungen:
FR-A- 2 397 934      FR-A- 2 438 932
GB-A- 1 526 777      LU-A- 41 916
US-A- 2 644 983      US-A- 4 137 623

(73) Patentinhaber: **Kabelwerk Eupen AG Cablerie
d'Eupen SA Kabelfabriek Eupen NV
Malmedyer Strasse 9
B-4700 Eupen(BE)**

(72) Erfinder: **Pelzer, Rudolf
Auf der Pief 37
W-5120 Herzogenrath(DE)**

(74) Vertreter: **Overath, Philippe et al
Cabinet Bede 13, Avenue Antoine Depage
B-1050 Bruxelles(BE)**

Rank Xerox (UK) Business Services

## Beschreibung

Die Erfindung betrifft ein Verfahren zur Schmierung flexibler Kabelschutzrohre aus Kunststoff, in welche bei der Kabelverlegung ein Kabel mittels Kabeleinziehdraht einziehbar ist.

Aus der US-A-4 137 623 ist es bekannt, einen Kabeleinziehdraht (fishtape) durch ein bereits verlegtes Kabelschutzrohr zu ziehen, an einem Bandende das zu verlegende Kabel zu befestigen und anschließend mit Hilfe des Einziehbandes in das Kabelschutzrohr einzuziehen. Ein mit Schmiermittel getränkter Schwamm am kabelseitigen Ende des Einziehbandes dient der Schmierung der Rohrinnenfläche für das folgende Kabel. Eine gleichmäßige Schmierung, insbesondere bei langen Kabelschutzrohren, die im Falle von Lichtwellenleiterkabeln Längen im Kilometerbereich aufweisen können, ist nicht stets sichergestellt. Auch wirkt die Schmierung lediglich auf das Kabel und nicht auf den Kabeleinziehdraht, so daß unter Umständen sehr hohe Zugkräfte aufgewandt werden müssen. Auch besteht die Gefahr, daß der unter dementsprechend hoher Zugbelastung stehende Kabeleinziehdraht das Kabelschutzrohr im Bereich von Rohrbögen beschädigt.

Die GB-A-15 26 777 betrifft ein Verfahren zur Ummantelung von Glasfasern, um deren Handhabung zu verbessern, insbesondere die Bruchgefahr zu verringern, sowie Schäden aufgrund unmittelbaren Kontakts von Glasfasern miteinander zu vermeiden. Bei fertigummantelten Glasfasern tritt zu keiner Zeit das Problem auf, eine Relativbewegung zwischen Kern und Mantel durch Reduzierung der Reibung zwischen Kern und Mantel zu erreichen.

Der FR-A-2 397 934 ist zu entnehmen, daß man bei der Herstellung eines einen Kabeleinziehdraht aufweisenden gewellten Kabelschutzrohres die gewünschte Wellung dadurch erhält, daß man das Rohrspritzmaterial unmittelbar nach dem Verlassen des Rohrspritzkopfes durch Aufbau eines entsprechenden Innendrucks gegen eine mit dem Extrudierschlauch wandernde bewegliche Außenform andrückt. Ein Besprühen der Rohrinnenfläche mit Gleitmittel findet hier nicht statt und ist auch nicht möglich, da ein statischer Druck im Rohrinneren herrscht, der ein Strömen der Treibluft unmöglich macht.

Die LU-A-41 916 liegt auf dem Gebiete der Metalldrahtummantelungen mit Extrusionsschlauch bzw. Gewebeschlauch. Zwischen Kern und Mantel wird ein Antikorrosionsmittel zwischen Kern und Mantel eingebracht. Auch kann zur Erleichterung des Einschiebens des Drahts in einen bereits vorher gefertigten Plastikschlauch letzterer durch Einblasen von Preßluft aufgeweitet werden, um das Einschieben des Drahtes zu erleichtern. Dieser wird dann anschließend von dem Plastikschlauch fest umschlossen.

Die US-A-2 644 983 befaßt sich mit dem Problem des Spritzens von Kunststoffschläuchen mit möglichst präzise eingehaltenem Querschnitt. Um das schwerkraftbedingte Durchhängen eines langen Spritzdorns zu verhindern, wird hier vorgeschlagen, den Spritzdorn samt der ihn umgebenden Hülse ständig gleichmäßig zu drehen. Zur Reduzierung der Reibung zwischen dem Extrusionsmaterial und dem Dorn bzw. der Hülse wird Schmiermittel bereits im Spritzkopf durch den Dorn bzw. die Hülse an die Außenfläche bzw. Innenfläche des Kunststoffmaterialschlauchs zugeführt. Kurz vor Verlassen der rotierenden Hülse wird Schmiermittel von der Außenseite des Schlauchs abgeführt; das Schmiermittel innerhalb des Schlauchs wird anschließend abgelassen.

Der Erfindung liegt die Aufgabe zugrunde, ein Verfahren der gattungsgemäßen Art bereitzustellen, welches kostengünstig durchführbar ist und für zuverlässige Schmierung beim Kabeleinziehvorgang sorgt.

Diese Aufgabe wird durch die kennzeichnenden Merkmale des Anspruchs 1 in Verbindung mit den Merkmalen des Oberbegriffs gelöst. Bereits bei der Kabelschutzrohrextrusion wird die Rohrinnenfläche mit Gleitmittel besprüht, so daß man bei geringem Gleitmittelverbrauch eine gleichmäßige Gleitmittelschichtdicke erhält. Eine gute Gleitmittelhaftung ist gewährleistet, so daß die gewünschte Schmierwirkung auch dann noch gegeben ist, wenn ein Kabel erst nach Jahren in das Kabelschutzrohr eingezogen wird.

Als Gleitmittel kommt bevorzugt ein Mineral-Öl, ein Silicon-Öl oder andere organische Flüssigkeit in Frage, wie z.B. Glycerin. Als Gleitmittel kann man auch organische Medien verwenden, wie z.B. Wachs, insbesondere Paraffin oder Olefin oder PTFE (Polytetrafluorethylen).

Dabei erhält man bei relativ geringem verspritzten Gleitmittelvolumen eine gleichmäßige Gleitmittelverteilung auf großen Flächen, wenn man in einer Weiterbildung der Erfindung das Gleitmittel, sei es unter Gaszufuhr (mit Treibgas) oder mit Flüssigkeitsdruck, versprüht.

Die Erfindung wird im folgenden an einem Ausführungsbeispiel an Hand der beigefügten Zeichnung erläutert. Es zeigt:

Fig. 1    eine schemaartige Gesamtansicht einer Vorrichtung zur erfindungsgemäßen Herstellung mit Schmierung versehener flexibler Kabelschutzrohre aus Kunststoff;

Fig. 2    eine Detailansicht teilweise im Schnitt der Anordnung in Fig. 1 im Bereich des Rohrspritzkopfes;

Fig. 3    die Anordnung gemäß Fig. 2, jedoch mit herausgezogenem Drahtführungsrohr;

Fig. 4    das Detail A in Fig. 2 in vergrößertem Maßstab;

Fig. 5    einen Schnitt nach Linie V-V in Fig. 3 durch den Kabelspritzkopf.

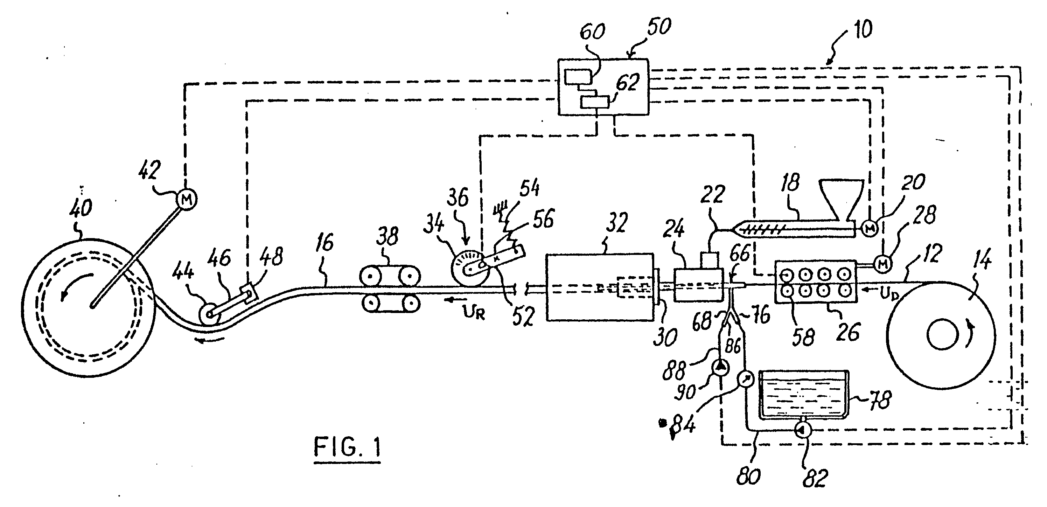

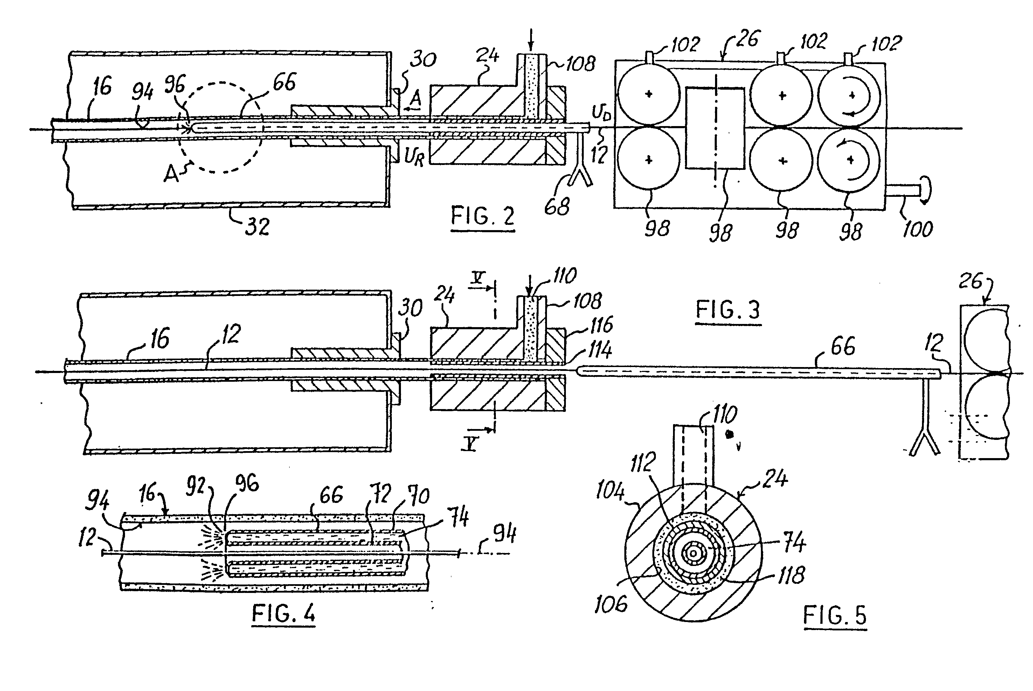

Die in Fig. 1 schemaartig dargestellte Vorrichtung 10 zur Herstellung von Kabelschutzrohren mit Kabeleinziehdraht erhält den Draht 12 beispielsweise von einer Spule 14 und das Kunststoffmaterial für das Kabelschutzrohr 16 von einem Schneckenextruder 18 mit Extruder-Antriebsmotor 20. Vom Schneckenextruder 18 führt eine Leitung 22 in einen Rohrspritzkopf 24, welcher in den Figuren 2, 3 und 5 in weiteren Einzelheiten dargestellt ist. Der Rohrspritzkopf (Rohr-Offset-Spritzkopf) 24 erhält ferner den Draht 12 über eine Draht-Vorschubeinrichtung 26 zugeliefert. Ein Antriebsmotor der Draht-Vorschubeinrichtung 26 ist in Fig. 1 mit 28 bezeichnet. Das vom Rohrspritzkopf 24 abgegebene, noch nicht erhärtete Kabelschutzrohr 16 samt eingesetztem Draht 12 durchläuft eine Kalibrierhülse 30 in einer Stirnwand eines Kühlgehäuses 32. Im Kühlgehäuse 32 befinden sich in nicht dargestellter Weise eine Reihe von Abkühlbecken zur Abkühlung des Kabelschutzrohrs auf Raumtemperatur. Das abgekühlte Kabelschutzrohr wird mittels eines nicht dargestellten Bedruckungsgeräts, beispielsweise mit einer Kabelkennzeichnung, bedruckt. Es schließt sich ein in Fig. 1 wiederum dargestelltes Tastrad 34 an als Teil eines digitalen Meßwertaufnehmers 36 zur Messung der Rohrextrusionsgeschwindigkeit $V_R$. Es folgt eine Rohr-Vorschubeinrichtung (Abzug) 38, welche auf die Rohrextrusionsgeschwindigkeit $V_R$ eingestellt ist. Das fertige Kabelschutzrohr wird auf eine Aufwickelspule 40 aufgewickelt, welche von einem Motor 42 angetrieben ist. Der Regelung der Drehgeschwindigkeit des Motors 42 dient eine Durchhang-Steuerung welche durch eine sog. Tänzerrolle 44 verwirklicht sein kann. Die Rolle 44 ist an einem Schwenkhebel 46 gelagert, wobei der Schwenkwinkel von einer Winkelmeßeinheit 48 gemessen wird.

Eine durch einen Block 50 symbolisierte Auswerteschaltung steuert die Vorrichtung 10. Sie ist hierzu über entsprechende, strichliert angedeutete Leitungen sowohl mit den Motoren 20,28 und 42 verbunden als auch mit der Winkelmeßeinheit 48 und der Geschwindigkeits-Meßeinheit 36, insbesondere mit einem digitalen Meßwertaufnehmer 52 in Form beispielsweise eines optischen Abtastkopfes, welcher ein Strichraster des Rades 34 abtastet. Hierzu kann der Meßwertaufnehmer 52 an einen das Rad 34 halternden in Richtung auf das Rohr 16 vorgespannten (Zugfeder 54 am anderen Hebelarm) angebrachten Doppelarmhebel 56 angebracht sein. Zur Messung der Draht-Vorschubgeschwindigkeit $V_D$ ist die Auswerteschaltung 50 ferner mit der Drahtvorschubeinrichtung 26 verbunden, insbesondere mit einen Drehgeschwindigkeitsmesser an einer Druckrolle 58 der aus insgesamt 4 Druckrollen-Paaren aufgebeuten Draht-Vorschubeinrichtung 26.

Die Auswerteschaltung 50 regelt nun die Draht-Vorschubgeschwindigkeit $V_D$ durch entsprechende Ansteuerung des Motors 28 derart, daß die Differenz zwischen der Drahtvorschubgeschwindigkeit $V_D$ und der Rohrextrusionsgeschwindigkeit $V_R$ verschwindet. Die Auswerteschaltung 50 kann eine Anzeige, insbesondere Digitalanzeige 60, aufweisen, um den Ist-Wert der Draht-Vorschubgeschwindigkeit anzuzeigen und ggf. die effektive Draht- und Rohrlänge, um die ggf. automatische Herstellung von Chargen mit unterschiedlicher Rohrlänge zu ermöglichen. Zur Messung der effektiven Rohrlänge kann es genügen, wenn man einen Impulszähler 62 an den digitalen Meßwertaufnehmer 52 anschließt, da die aufgezählten Impulse zur jeweiligen Rohrlänge proportional sind.

In Fig. 1 erkennt man schließlich noch ein in den Figuren 2 bis 5 detaillierter dargestelltes Drahtführungsrohr 66, mit einem gabelförmigen Anschlußrohr 68. Das Drahtführungsrohr 66 ist gemäß den Fig. 4 und 5 doppelwandig ausgebildet, mit einer äußeren Rohrwand 70 und einer inneren Rohrwand 72. In den zwischen den beiden Wänden 70 und 72 gebildeten Ringraum 74 mündet das Anschlußrohr 68 ein. Der eine Gabelschenkel 76 des Anschlußrohrs 68 ist mit einem Gleitmittel-Vorratsbehälter 78 verbunden, und zwar über eine Leitung 80. In der Leitung 80 befindet sich eine Zuführpumpe 82 sowie ggf. ein Druckmesser 84. Die Pumpe 82 ist über eine Steuerleitung mit der Auswerteschaltung 50 verbunden, so daß die Gleitmittel-Zufuhr in den Ringraum 74 des Drahtführungsrohrs 70 durch die Auswerteschaltung 50 automatisch steuerbar ist. Als Gleitmittel kommt Mineralöl, Silikonöl, Glycerin, Wachs oder dergl. in Frage. An den anderen Gabelschenkel 86 des Anschlußrohres 68 ist eine Druckluftleitung 88 angeschlossen, welche in einem Druckluftmotor 90 endet. Dieser Druckluftmotor 90 ist wiederum mit der Auswerteschaltung 50 zur Steuerung der Vorrichtung 10 verbunden. Durch das Anschlußrohr 68 am in den Fig. 1 bis 4 rechten Ende des Drahtführungsrohrs 66 kann also im vorgegebenen Verhältnis Druckluft und Gleitmittel in den Ringraum 74 gepreßt werden, um dann durch Gleitmittel-Spritzdüsen 92 am in den Fig. 1 bis 4 linken Ende des Drahtführungsrohre 66 hindurch sowohl auf die Rohrinnenfläche 94 als auch auf den Umfang des Drahtes 12 gesprüht zu werden.

Die Spritzdüsen 92 können beispielsweise dadurch gebildet werden, daß man die am Rohrende zusammengebogenen und miteinander dicht verbundenen, insbesondere verschweißten, Wände 70 und 72 dort mit axialen Bohrungen versieht.

Das Drahtführungsrohr 66 ist in Richtung seiner Rohrachse 96 verschiebbar gelagert, und zwar zwischen einer in Fig. 2 dargestellten, am weitesten links liegenden Arbeitsposition und einer am weitesten rechts liegenden Rückzugsposition gemäß Fig. 3. In der Arbeitsposition befindet sich das linke Rohrende in einem derart großen Abstand vom Spritzkopf 24, daß das vom Rohrspritzkopf 24 erzeugte und bis in den Bereich des Rohrendes 96 gelangte Kabelschutzrohrmaterial bereits teilweise verfestigt ist. Der innerhalb der inneren Wand 72 des Drahtführungsrohrs 66 geführte, im Idealfall konzentrisch zur Rohrachse verlaufende Draht 12, darf folglich anschließend an das Rohrende 96 ohne weiteres die Rohrinnenfläche 94 berühren, ohne daß befürchtet werden muß, daß der Draht 12 an der Rohrinnenfläche 94 festklebt, oder gar in die Rohrwand eindringt. Während das Kabelschutzrohr 16 also in Richtung A der Fig. 2 (von rechts nach links) mit der Rohrextrusionsgeschwindigkeit $V_R$ am Rohrende 96 vorbeibewegt wird, wird die Rohrinnenfläche 94 mit Gleitmittel besprüht, dementsprechend auch der in der gleichen Richtung und möglichst mit derselben Geschwindigkeit sich bewegende Draht 12.

Für die richtige Draht-Vorschubgeschwindigkeit $V_D$ sorgt die bereits erwähnte Draht-Vorschubeinrichtung 26, welche gemäß Fig. 1 und 2 aus 4 Druckrollen-Paaren 98 besteht sowie einer Vorgelegewelle 100. Man erkennt ferner Einstellschrauben 102 für die gegenseitige Andruckkraft der Druckrollen-Paare 98. Um ein Richten des Drahtes in zwei zueinander senkrechten Richtungen zu erreichen, ist beispielsweise eines der 4 Druckrollen-Paare um 90° gegenüber den anderen verdreht angeordnet.

Der grundlegende Aufbau des Rohrspritzkopfs 24 geht aus den Fig. 2, 3 und 5 hervor. Ein zur Rohrachse 94 koaxialer zylindrischer Grundkörper 104 weist eine durchgehende Axialbohrung 106 auf, deren Durchmesser im wesentlichen dem Außendurchmesser des Kabelschutzrohres 16 entspricht. Ein an den Schneckenextruder 18 gemäß Fig. 1 angeschlossener Zuführstutzen 108 des Grundkörpers 104 ist mit einer in die Bohrung 106 radial einmündenden Zuführbohrung 110 versehen, durch welche das plastifizierte Kunststoffmaterial in die Bohrung 106 transportiert wird. Ein in den Figuren mit einer Kreuz-Schraffur versehener, hülsenförmiger Spritzdorn 112 durchsetzt die Bohrung 106 über ihre gesamte Länge und ist in einer entsprechend dimensionierten Aufnahmebohrung 114 einer am Grundkörper 24 befestigten Abschlußplatte 116 gelagert. Der Außendurchmesser des Spritzdorns 112 entspricht im wesentlichen dem Innendurchmesser des herzustellenden Kabelschutzrohres 16. Auf diese Weise wird ein an den Kanal 110 angeschlossener Ringraum 118 zwischen dem Innenumfang der Bohrung 106 und dem Außenumfang des Dorns 112 gebildet, welcher dem Kabelschutzrohr-Querschnitt entspricht. Durch Zuführen von plastifiziertem Kunststoffmaterial in diesen Raum unter Druck durch die Leitung 110 erreicht man, daß am in den Fig. 2 und 3 linken Ende der Bohrung 106 das noch weiche Kunststoffmaterial in Rohrform austritt. In der sich anschließenden Kalibrierhülse 30 wird der Außendurchmesser des Rohres genau auf das gewünschte Maß gebracht. Dabei tritt der Draht 12 in das in Fig. 2 rechte Ende des Drahtführungsrohrs 66 ein. An diesem Ende sind die beiden Wände 70 und 72 miteinander abdichtend verbunden, insbesondere durch Verschweißen, so daß der Ringraum 74 gemäß Fig. 1 allseits geschlossen ist, bis auf die Düsen 92 am gegenüberliegenden Ende und auf das gabelförmige, in den Ringraum 74 einmündende Anschlußrohr 68.

Wie die Fig. 2 und 5 zeigen, entspricht der Innendurchmesser des hülsenförmigen Spritzdorns 112 gerade dem Außendurchmesser des Drahtführungsrohrs 66, so daß das Drahtführungsrohr 66 von der Hülse 112 angenähert koaxial zum Kabelschutzrohr 16 gehalten wird. Der sich an den Rohrspritzkopf 24 nach links bis zum Rohrende 96 anschließende Rohrabschnitt hat daher stets ausreichenden Abstand zum Kabelschutzrohr 16.

Dieser Abstand ist jedoch beim Anfahren der Vorrichtung 10 nicht gewährleistet, da das Vorlaufende des im Spritzkopf 24 hergestellten Kabelschutzrohres nicht formstabil ist. Auch kann es anfänglich an der Kalibrierhülse 30 zu einem Materialstau kommen. Beim Anfahren der Vorrichtung 10 wird folglich das Drahtführungsrohr 66 in seine Rückzugsstellung gemäß Fig. 3 zurückgezogen, wobei ggf. auch die Drahtvorschubeinrichtung 26 entsprechend zurückzuziehen ist. Sobald ein gut kalibriertes Kabelschutzrohr vorliegt, wird das Drahtführungsrohr 66 durch das rechtsseitige Ende des Rohrspritzkopfes 24 bis in die Arbeitsposition gemäß Fig. 2 vorgeschoben. Dann wird im Schnellgang der Draht-Vorschubeinrichtung 26 von dieser der Draht 12 in das Kabelschutzrohr 16 eingeschoben, bis er das freie Rohrende erreicht hat. Dann erst wird die vorstehend beschriebene Auswerteschaltung 50 in Gang gesetzt, welche die Draht-Vorschubgeschwindigkeit $V_D$ an die Rohrextrusionsgeschwindigkeit $V_R$ anpaßt.

Aufgrund der gleichen Geschwindigkeiten ergibt sich auch exakt die gleiche Länge von Kabelschutzrohr 16 und innerhalb des Kabelschutzrohrs verlaufendem Einziehdrat 12 (in gestrecktem Zustand des Kabelschutzrohrs 16). Von den elastischen Eigenschaften des Kabelschutzrohres beim Aufwickeln auf die Trommel 40 gemäß Fig. 1 abhängig, folgt der Draht 12 mehr oder weniger der Rohrachse des aufgewickelten Kabelschutzrohres.

Das Kabelschutzrohr besteht vorzugsweise aus Hochdruck(High Density)-Polyethylen (HDPE). Da die einzuziehenden Kabel, insbesondere Lichtwellenleiter-Kabel, entweder mit Polyethylen (PE) oder Weich-Polyvinylchlorid (PVC) ummantelt sind, ergibt sich eine geringe Reibung zwischen Kabel und Rohrwandung beim Einziehen des Kabels aufgrund der Schmierung der Rohrinnenfläche 94 mit Gleitmittel. Da auch der Draht 12 mit Gleitmittel versehen ist, ist auch dessen Reibungskraftbeitrag beim Einziehen eines Kabels gering. Die ringförmig am Drahtführungsrohrende 96 vorgesehenen Sprühdüsen 92 versprühen einen weitgefächerten Schleier feinster Gleitmittel-Tröpfchen, die sich als Nebel auf die Rohrinnenfläche 94 und die Ziehdrahtoberfläche niederschlagen und so für gute Ausnützung des Gleitmittels sorgen. Das Material des Kabelschutzrohrs im Bereich des Rohrendes 96 ist zwar bereits teilweise verfestigt, jedoch noch heiß, so daß das aufgesprühte Gleitmittel haftet.

Sämtliche Vorgänge des Herstellungsprozesses, nämlich die Extrusion des Kabelschutzrohres, das fortwährende Einschieben des Ziehdrahts, das Pumpen und Besprühen mit Gleitmittel, laufen kontinuierlich ab. Nach Beendigung des Herstellungsverfahrens werden der Schneckenextruder 18, die Draht-Vorschubeinrichtung 26 sowie die Pumpen 82,90 abgeschaltet, sodann die Draht-Vorschubeinrichtung 26 zurückgefahren und das Drahtführungsrohr doppelwandiges Stahlrohr) aus dem Kabelschutzrohr sowie dem Rohrspritzkopf (Offset-Kopf) herausgezogen.

Erfindungsgemäß können Kabelschutzrohre mit über 1.000 m Länge ohne weiteres in einem Stück verlegt werden mit anschließendem Einziehen des Kabels.

**Patentansprüche**

1. Verfahren zur Schmierung flexibler Kabelschutzrohre aus Kunststoff, in welche bei der Kabelverlegung ein Kabel mittels Kabeleinziehdraht einziehbar ist, **dadurch gekennzeichnet,** daß man bereits bei der Kabelschutzrohrherstellung die Rohrinnenfläche mit Gleitmittel besprüht, und zwar in einem Bereich, in dem das aus dem Rohrspritzkopf tretende Material zwar bereits teilweise verfestigt, jedoch noch so heiß ist, daß das aufgesprühte Gleitmittel haftet.

2. Verfahren nach Anspruch 1, **dadurch gekennzeichnet,** daß man als Gleitmittel ein Mineral-Öl, ein Silikon-Öl oder andere organische Flüssigkeiten verwendet, wie z.B. Glycerin.

3. Verfahren nach Anspruch 2, **dadurch gekenn-**

zeichnet, daß man als Gleitmittel organische Medien verwendet, wie z.B. Wachs, insbesondere Paraffin oder Olefin oder PTFE (Polytetrafluorethylen).

4. Verfahren nach einem der Ansprüche 1 bis 3, **dadurch gekennzeichnet,** daß man das Gleitmittel, sei es unter Gaszufuhr (mit Treibgas) oder mit Flüssigkeitsdruck, versprüht.

**Claims**

1. Method of lubricating flexible cable-protection pipes of plastic, into which a cable can be drawn, for example by means of a cable drawing-in wire, during cable laying, characterised in that the pipe inner surface is already sprayed with lubricant during cable-protection pipe production, to be precise in an area in which the material emerging from the pipe extrusion head, although already partially solidified, is nevertheless still hot enough for the lubricant sprayed on to adhere.

2. Method according to Claim 1, characterised in that a mineral oil, a silicone oil or other organic liquids, such as for example glycerin, is used as lubricant.

3. Method according to Claim 2, characterised in that organic media, such as for example wax, in particular paraffin or olefin or PTFE (polytetrafluoroethylene), is used as lubricant.

4. Method according to one of Claims 1 to 3, characterised in that the lubricant is sprayed, whether under gas supply (with propellant) or by hydrostatic pressure.

**Revendications**

1. Procédé pour lubrifier des tubes flexibles en matière plastique pour la protection de câbles, dans lesquels on peut, au moment de la pose des câbles, tirer un câble par exemple au moyen d'un fil de tirage, caractérisé en ce que la surface intérieure du tube est pulvérisée de lubrifiant déjà au moment de la fabrication du tube de protection de câbles, et ce dans une zone dans laquelle le matériau sortant de la tête d'injection est déjà partiellement solidifié, mais encore suffisamment chaud pour que le lubrifiant projeté y adhère.

2. Procédé selon la revendication 1, caractérisé en ce que l'on emploie comme lubrifiant une huile minérale, une huile de silicone ou d'autres liquides organiques comme par exemple de la glycérine.

3. Procédé selon la revendication 2, caractérisé en ce que l'on emploie comme lubrifiant des substances organiques, comme par exemple des cires, en particulier des paraffines ou des oléfines ou du PTFE (polytétrafluoréthylène).

4. Procédé selon l'une des revendications 1 à 3, caractérisé en ce que le lubrifiant est appliqué avec amenée de gaz (avec un gaz propulseur) ou sous pression de liquide.

FIG. 1

EP 0 274 018 B1

FIG. 2

FIG. 3

FIG. 4

FIG. 5